(19) Europäisches Patentamt
European Patent Office
Office européen des brevets

(11) **EP 4 514 866 B1**

(12) **FASCICULE DE BREVET EUROPEEN**

(45) Date de publication et mention de la délivrance du brevet:
**20.08.2025 Bulletin 2025/34**

(21) Numéro de dépôt: **24746399.5**

(22) Date de dépôt: **08.07.2024**

(51) Classification Internationale des Brevets (IPC):
***C08F 220/54*** *(2006.01)* ***C08F 220/56*** *(2006.01)*
***C08F 220/58*** *(2006.01)* ***C08F 293/00*** *(2006.01)*
***C09K 8/588*** *(2006.01)*

(52) Classification Coopérative des Brevets (CPC):
(C-Sets disponibles)
**C08F 220/56; C08F 220/54; C08F 220/58; C08F 293/005; C09K 8/588;** C08F 2438/03 (Cont.)

(86) Numéro de dépôt international:
**PCT/FR2024/050926**

(87) Numéro de publication internationale:
**WO 2025/012561 (16.01.2025 Gazette 2025/03)**

# (54) POLYMERE ET SON UTILISATION COMME REDUCTEUR DE VISCOSITE D'HYDROCARBURES

POLYMER UND SEINE VERWENDUNG ALS VISKOSITÄTSMINDERER VON KOHLENWASSERSTOFFEN

POLYMER AND ITS USE AS A VISCOSITY REDUCER FOR HYDROCARBONS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.07.2023 FR 2307277**

(43) Date de publication de la demande:
**05.03.2025 Bulletin 2025/10**

(73) Titulaire: **SNF Group**
**42160 Andrézieux-Bouthéon (FR)**

(72) Inventeurs:
- **KIEFER, Johann**
**42160 Andrezieux-Boutheon (FR)**
- **FAVERO, Cédrick**
**42160 Andrezieux-Boutheon (FR)**
- **SOUZY, Renaud**
**42160 Andrezieux-Boutheon (FR)**

(74) Mandataire: **Ipsilon Lyon**
**Le Contemporain**
**50 Chemin de la Bruyère**
**69574 Dardilly Cedex (FR)**

(56) Documents cités:
**EP-A2- 0 444 864** **CN-A- 107 880 214**
**CN-A- 112 592 444** **JP-A- 2015 080 903**

- **WU RUONAN ET AL: "Synthesis, characterization and application of dual thermo- and solvent-responsive double-hydrophilic diblock copolymers of N-acryloylmorpholine and N-isopropylacrylamide", JOURNAL OF MOLECULAR LIQUIDS, ELSEVIER, AMSTERDAM, NL, vol. 357, 6 April 2022 (2022-04-06), XP087043758, ISSN: 0167-7322, [retrieved on 20220406], DOI: 10.1016/J.MOLLIQ.2022.119053**
- **WU RUONAN ET AL: "Preparation and evaluation of double-hydrophilic diblock copolymer as viscosity reducers for heavy oil", vol. 140, no. 2, 26 October 2022 (2022-10-26), US, XP093120964, ISSN: 0021-8995, Retrieved from the Internet <URL:https://onlinelibrary.wiley.com/doi/full-xml/10.1002/app.53278> [retrieved on 20240118], DOI: 10.1002/app.53278**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **DE LAMBERT ET AL: "Poly(N-tert-butyl acrylamide-b-N-acryloylmorpholine) amphiphilic block copolymers via RAFT polymerization: Synthesis, purification and characterization", POLYMER, ELSEVIER, AMSTERDAM, NL, vol. 48, no. 2, 18 January 2007 (2007-01-18), pages 437 - 447, XP005824199, ISSN: 0032-3861, DOI: 10.1016/J.POLYMER.2006.11.059**
- **YUN SUK JO ET AL: "RAFT Homo- and Copolymerization of N -Acryloyl-morpholine, Piperidine, and Azocane and Their Self-Assembled Structures", MACROMOLECULES, vol. 41, no. 4, 1 February 2008 (2008-02-01), pages 1140 - 1150, XP055164046, ISSN: 0024-9297, [retrieved on 20240119], DOI: 10.1021/ma071710t**


(52) Classification Coopérative des Brevets (CPC): (Cont.)

C-Sets
**C08F 220/54, C08F 220/54, C08F 220/58;**
**C08F 220/54, C08F 220/58;**
**C08F 220/56, C08F 220/54, C08F 220/58;**
**C08F 220/58, C08F 220/54**

## Description

### Domaine technique de l'invention

La présente invention concerne un polymère et son utilisation comme réducteur de viscosité d'hydrocarbures, notamment les hydrocarbures lourds et/ou extra-lourds.

### Etat antérieur de la technique

Selon les projections de l'Organisation des pays exportateurs de pétrole (OPEP), la demande en pétrole atteindra 111,1 millions de barils par jour d'ici 2040, soit une augmentation de 23,1 % par rapport aux données actuelles. En raison de cette demande mondiale croissante d'énergie et de la disponibilité de plus en plus limitée des hydrocarbures bruts conventionnels ou faciles à produire, l'exploitation des hydrocarbures lourds et extra-lourds non conventionnels fait l'objet d'une grande attention. Parmi les réserves prouvées d'hydrocarbures dans le monde, plus de la moitié concernent des hydrocarbures lourds ou extra-lourds.

Les hydrocarbures sont qualifiés de « lourds » ou « d'extra-lourds » car leur densité et leur viscosité apparente sont plus élevées que celle des hydrocarbures légers (c'est-à-dire les hydrocarbures conventionnels). En raison de leur densité, ils s'accumulent au fond des réservoirs et/ou ils sont très difficiles à extraire. Une fois extraits, ils restent difficiles à transporter du puits vers les installations de stockage, les raffineries ou les terminaux d'expédition.

Diverses techniques sont connues pour faciliter le déplacement des hydrocarbures lors de la production, de la récupération assistée, ou du transport vers une raffinerie ou une zone de stockage. Ces techniques comprennent, par exemple, le pompage mécanique, le pompage mécanique combiné à l'injection de vapeur ou de chaleur afin de maintenir une faible viscosité en vue du transport par oléoduc (pipeline). Cependant, des interruptions prolongées du pompage se produisent régulièrement, ce qui a pour effet de refroidir les hydrocarbures et de boucher les canalisations et les pompes. Il est alors généralement nécessaire de chauffer à nouveau les hydrocarbures qui engendre la dépense d'une grande quantité d'énergie et donc un impact économique et environnementalement très important.

D'autres méthodes de récupération des hydrocarbures existent, principalement : la récupération par mélange avec des diluants, la récupération par émulsification et la récupération par ajout d'un réducteur de viscosité soluble dans les hydrocarbures.

Pour les diluants (par exemple, du fioul ou du kérosène), il est nécessaire d'en utiliser une grande quantité et ils ne sont généralement pas facilement disponibles dans les zones de production. Leur acheminement jusqu'au champ sur de grandes distances entraine un coût et une dépense énergétique importants.

La récupération des hydrocarbures par émulsification nécessite l'injection d'eau, de tensioactifs et autres additifs qui doivent, une fois le transport effectué, être séparés des hydrocarbures lourds, l'impact écologique étant une nouvelle fois conséquent.

Divers réducteurs de viscosité ont été également développés : le document CN110452676 décrit des polymères à base de lignosulfonate, le document CN110484228 décrit des alkylphénol polyoxyéthylène, le document CN112592430 décrit des polymères à base d'acryloyl morpholine et d'anhydride maléique, le document US2003135003 décrit un copolymère d'ester acrylique et de N-vinyl pyrrolidone, le document US20070062101 décrit un polyacrylate et le document US2005085588 décrit un latex de monomères acrylique pour réduire la cristallisation des paraffines et améliorer l'écoulement du brut pétrolier. Bien que ces polymères permettent de réduire la viscosité des hydrocarbures, leur efficacité est limitée, notamment à basse température, par exemple à 50°C ou moins comme 20°C.

WU et al. ont décrit l'utilisation de copolymères comprenant deux blocs hydrophiles d'ACMO et de N-isopropylacrylamide ("Synthesis, characterization and application of dual thermo- and solvent-responsive double-hydrophilic diblock copolymers of N-acryloylmorpholine and N-isopropylacrylamide", Journal of Molecular Liquids, vol. 357, 6 avril 2022). Le cisaillement de ces copolymères n'est pas mentionné.

WU et al. ont décrit un copolymère comprenant un bloc d'ACMO et un bloc de N,N-diméthylacrylamide ou N,N-diéthylacrylamide ("Preparation and evaluation of double-hydrophilic deblock copolymer as viscosity reducers for heavy oil", Journal of Applied Polymer Science, vol. 140, no. 2, 26 octobre 2022). Le cisaillement de ce copolymère n'est pas mentionné.

De Lambert et al. ont décrit des copolymères blocs amphiphiles et leur utilisation dans le domaine de la biologie ("Poly(N-tert-butyl acrylamide-b-N-acryloylmorpholine) amphiphilic block copolymers via RAFT polymerization: Synthesis, purification and characterization", Polymer, vol. 48, no. 2, 18 janvier 2007, pages 437-447).

Le document EP 0 444 864 décrit une composition anti-buée durcissable par exposition aux rayons UV, cette composition comprenant un polymère à blocs ayant une partie hydrophile et une partie hydrophobe.

Le document JP 2015 080903 décrit une composition d'encre photopolymérisable.

Yun Suk Jo et al. ont décrit l'utilisation dans le domaine de la biologie de polymères d'ACMO, d'acryloyl-pipéridine et d'acryloyl-azocane ("RAFT Homo- and Copolymerization of N-Acryloyl-morpholine, Piperidine, and Azocane and Their

Self-Assembled Structures", Macromolecules, vol. 41, no. 4, 1 février 2008, pages 1140-1150).

Malgré le développement de ces techniques, il existe un besoin de produits permettant de diminuer la viscosité des hydrocarbures, notamment à température ambiante, pour réduire l'impact environnemental de l'extraction desdits hydrocarbures, particulièrement les hydrocarbures lourds ou extra-lourds.

La Demanderesse a découvert un polymère permettant de réduire de façon efficace la viscosité des hydrocarbures, notamment lourds et/ou extra-lourds. Le polymère utilisé dans le cadre de l'invention permet de réduire la quantité d'énergie nécessaire pour transporter les hydrocarbures en étant efficace à température ambiante. Ce polymère permet ainsi de réduire l'impact environnemental de l'extraction des hydrocarbures, notamment lourds et/ou extra-lourds. Les risques lors de la manipulation desdits hydrocarbures à bas point d'inflammabilité sont également réduits car l'utilisation du polymère selon l'invention rend le chauffage des hydrocarbures facultatif.

Les propriétés du polymère utilisé dans la présente invention sont maintenues, même après avoir subi un cisaillement important, ce qui n'est pas le cas des polymères de monomères hydrophiles. En outre, ce polymère peut être utilisé sans chauffer les hydrocarbures dont la viscosité doit être réduite.

Le procédé de réduction la viscosité des hydrocarbures selon l'invention s'inscrit dans un principe de prise de conscience environnementale et de l'impact des industries et de l'homme sur la planète. Le procédé selon l'invention permet non seulement de réduire de façon efficace la viscosité des hydrocarbures, mais aussi de réduire la quantité d'énergie et d'eau nécessaires à l'extraction desdits hydrocarbures, ce qui engendre la réduction de la quantité des rejets de gaz à effet de serre tels que le $CO_2$ associés aux procédés de récupération d'hydrocarbures et leurs transports. En outre, l'énergie utilisée pour mettre en œuvre le procédé selon l'invention est avantageusement issue d'une pompe à chaleur ou d'origine renouvelable, par exemple l'éolien, le photovoltaïque, ou, en particulier pour les installations mobiles, de type pile à combustible ou batterie au lithium.

## Exposé de l'invention

La présente invention a pour objet un procédé de réduction de viscosité d'hydrocarbures comprenant la mise en contact entre des hydrocarbures et un polymère tel que défini dans la revendication 1.

## Description de l'invention

Par « polymère », on désigne un polymère comprenant au moins au moins un monomère A et au moins un monomère B, il peut optionnellement comprendre au moins un monomère C différent de A, le monomère C étant choisi parmi les monomères anioniques hydrophiles, les monomères non-ioniques hydrophiles, les monomères cationiques hydrophiles, les monomères zwitterioniques hydrophiles, et leurs mélanges. Le monomère C peut être un macromonomère à LCST ou un macromonomère à UCST.

Par « monomère hydrophile », on désigne un monomère qui présente un coefficient de partage octanol/eau, $K_{ow}$, inférieur ou égale à 1, dans lequel le coefficient de partage $K_{ow}$ est déterminé à 25°C dans un mélange octanol/eau ayant un rapport volumique de 1/1, à un pH compris entre 6 et 8.

Par « monomère hydrophobe », on désigne un monomère qui présente un coefficient de partage octanol/eau, $K_{ow}$, supérieur à 1, dans lequel le coefficient de partage $K_{ow}$ est déterminé à 25°C dans un mélange octanol/eau ayant un rapport volumique 1/1, à un pH compris entre 6 et 8.

Le coefficient de partage octanol/eau, $K_{ow}$, représente le rapport des concentrations (g/L) d'un monomère entre la phase octanol et la phase aqueuse. Il est défini comme suit :

$$K_{ow} = \frac{[monomère]_{octanol}}{[monomère]_{eau}}$$

Par définition, un polymère (ou un bloc) hydrosoluble est un polymère (ou un bloc) qui donne une solution aqueuse lorsqu'il est dissous sous agitation à 25°C et avec une concentration de 10 $g.L^{-1}$ dans l'eau.

Par « X et/ou Y », on entend « X », ou « Y », ou « X et Y ».

Font également partie de l'invention, toutes les combinaisons possibles entre les différents modes de réalisation divulgués, qu'il s'agisse de modes de réalisation préférés ou donnés à titre d'exemples. En outre, lorsque des plages de valeurs sont indiquées, les bornes font partie de ces plages. La divulgation inclut également toutes les combinaisons entre les bornes de ces plages de valeurs. Par exemple, les plages de valeurs « 1-20, préférentiellement 5-15 », impliquent la divulgation des plages « 1-5 », « 1-15 », « 5-20 » et « 15-20 » et des valeurs 1, 5, 15 et 20.

Par « hydrocarbures lourds », on entend des hydrocarbures dont la densité API (American Petroleum Institute) est inférieure à 31, préférentiellement inférieure à 29, plus préférentiellement inférieure à 20, et plus préférentiellement inférieure à 16, par exemple de moins de 31 à 10.

Par « hydrocarbures extra-lourds », on entend des hydrocarbures dont la densité API (American Petroleum Institute) est inférieure à 10, préférentiellement inférieure à 9, plus préférentiellement inférieure à 8, encore plus préférentiellement inférieure à 7, encore plus préférentiellement inférieure à 6, et encore plus préférentiellement inférieure à 5.

## Composition du polymère

Le polymère comprend au moins un monomère A (acryloyl morpholine) et un monomère B hydrophobe.
La quantité de monomère A dans le polymère est avantageusement comprise entre 10 et 65 mol% par rapport à la quantité total de monomère dans le polymère, préférentiellement entre 15 et 60 mol%, plus préférentiellement entre 20 et 50 mol%, et encore plus préférentiellement entre 20 et 45 mol%.
Le polymère utilisé dans l'invention comprend au moins 20 mol% d'au moins un monomère B hydrophobe.
Avantageusement, le ou les monomères hydrophobes B peuvent être choisis parmi les esters d'acide (méth)acrylique à groupe alkyle ou arylalkyle, ledit groupe pouvant comprendre une chaîne éthoxylée et/ou propoxylée ; les dérivés de (méth)acrylamide à groupe alkyle, arylalkyle ou dialkyle, ledit groupe pouvant comprendre une chaîne éthoxylée et/ou propoxylée ; des dérivés cationiques d'allyle ayant un groupe alkyle, arylalkyle ou dialkyle, ledit groupe pouvant comprendre une chaîne éthoxylée et/ou propoxylée ; des dérivés hydrophobes anioniques ou cationiques de (méth)acryloyle ; les dérivés monomères anioniques ou cationiques de (méth)acrylamide portant une chaîne hydrophobe ; et leurs mélanges. Les monomères hydrophobes peuvent comprendre des atomes d'halogène, par exemple du chlore.
Parmi ces monomères hydrophobes :

- les groupes alkyles sont de préférence en $C_4$-$C_{20}$, plus préférentiellement en $C_4$-$C_8$. Les alkyles en $C_6$-$C_{20}$ sont de préférence des alkyles linéaires tandis que les alkyles en $C_4$-$C_5$ sont de préférence ramifiés ; les groupes dialkyles comprennent 2 de ces groupes alkyles,
- les groupes arylalkyles sont de préférence en $C_7$-$C_{25}$, plus préférentiellement en $C_7$-$C_{15}$,
- les chaînes éthoxylées comprennent avantageusement entre 0 et 100 groupes $-CH_2-CH_2-O-$, de préférence entre 6 et 100, plus préférentiellement entre 10 et 40,
- les chaînes propoxylées comprennent avantageusement entre 0 et 50 groupes $-CH_2-CH_2-CH_2-O-$, de préférence entre 1 et 50, plus préférentiellement entre 1 et 20.

Des monomères hydrophobes préférés appartenant à ces classes sont, par exemple :

- le (méth)acrylate de n-hexyle, le (méth)acrylate de n-octyle, le (méth)acrylamide d'octyle, le (méth)acrylate de lauryle, le (méth)acrylamide de lauryle, le (méth)acrylate de myristyle, le (méth)acrylamide de myristyle, le (méth)acrylate de pentadécyle, (méth)acrylamide de pentadécyle, (méth)acrylate de cétyle, (méth)acrylamide de cétyle, (méth) acrylate d'oléyle, (méth)acrylamide d'oléyle, (méth)acrylate d'érucyle, (méth)acrylamide d'érucyle, et leurs mélanges,
- les dérivés cationiques d'allyle ayant une formule (I) ou (II) :

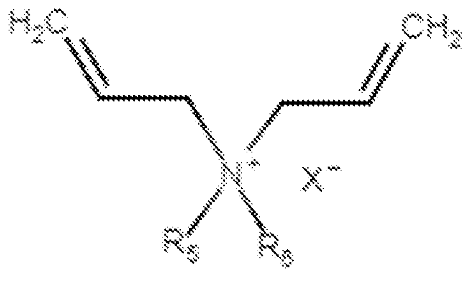
(I)

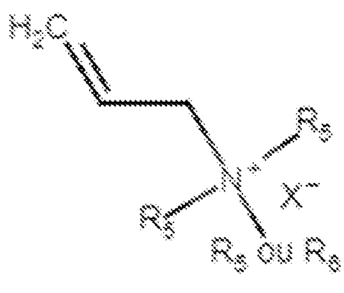
(II)

où, $R_5$ : indépendamment une chaîne alkyle contenant 1 à 4 carbones ;
$R_6$ : une chaîne alkyle ou arylalkyle comprenant 8 à 30 carbones ;
X : un halogénure choisi dans le groupe composé des bromures, chlorures, iodures, fluorures et de tout contre-ion chargé négativement ;
et, de préférence, les dérivés cationiques hydrophobes du type méthacryloyle répondant à la formule (III) :

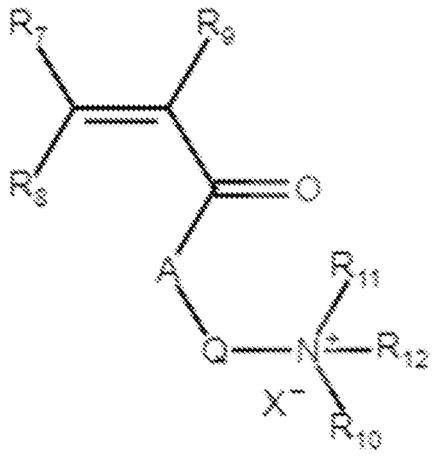

(III)

dans laquelle A : O ou N-$R_9$ (de préférence A=N-$R_9$),
$R_7$, $R_8$, $R_9$, $R_{10}$, $R_{11}$ : indépendamment un atome d'hydrogène ou une chaîne alkyle contenant 1 à 4 carbones,
Q : une chaîne alkyle comprenant 1 à 8 carbones,
$R_{12}$ : une chaîne alkyle ou arylalkyle comprenant 8 à 30 carbones,
X : un halogénure choisi dans le groupe composé des bromures, chlorures, iodures, fluorures, et de tout contre-ion chargé négativement.

Dans un mode préféré, le monomère hydrophobe B est choisi parmi : les dérivés d'acrylamide comme les N,N dialkyl acrylamido ou les N alkyl acrylamido, ces dérivés comprenant une chaine hydrocarbonée linéaire, ramifiée ou cyclique, pouvant comporter une ou plusieurs insaturations et/ou pouvant comporter un ou plusieurs hétéroatomes choisis parmi l'azote, l'oxygène , le silicium, le fluor et le soufre et/ou une fonction sulfonique, sulfonate, phosphorique, phosphate, phosphonique ou phosphinate, la chaine hydrocarbonée étant avantageusement en $C_4$-$C_{25}$, préférentiellement en $C_4$-$C_{14}$ et plus préférentiellement en $C_4$-$C_8$, et leurs mélanges. Le monomère hydrophobe B est avantageusement choisi parmi le N-tert-butyl acrylamide, le N-tert-octyl acrylamide et leurs mélanges.

La quantité de monomère B hydrophobe dans le polymère est avantageusement comprise entre 35 et 90 mol% par rapport à la quantité total de monomère dans le polymère, préférentiellement entre 40 et 85 mol%, plus préférentiellement entre 50 et 80 mol%, plus préférentiellement entre 55 et 80 mol%.

Dans un mode préféré, la quantité de monomère B hydrophobe dans le polymère est supérieure à la quantité de monomère A (acryloyl morpholine).

Dans un mode préféré, le polymère est constitué des monomères A et B, le monomère A étant l'acryloyl morpholine et le monomère B étant un monomère hydrophobe, avantageusement choisi parmi : les dérivés d'acrylamide comme les N,N dialkyl acrylamido ou les N alkyl acrylamido, ces dérivés comprenant une chaine hydrocarbonée linéaire, ramifiée ou cyclique, pouvant comporter une ou plusieurs insaturations et/ou pouvant comporter un ou plusieurs hétéroatomes choisis parmi l'azote, l'oxygène, le silicium, le fluor et le soufre et/ou une fonction sulfonique, sulfonate, phosphorique, phosphate, phosphonique ou phosphinate, les chaines hydrocarbonées sont avantageusement en $C_7$-$C_{25}$, préférentiellement en $C_4$-$C_{14}$ et plus préférentiellement en $C_4$-$C_8$, et leurs mélanges.

Le polymère peut optionnellement comprendre un ou plusieurs monomères C différents de A, choisis parmi les monomères anioniques hydrophiles, les monomères non-ioniques hydrophiles, les monomères cationiques hydrophiles, les monomères zwitterioniques hydrophiles, et leurs mélanges. Le monomère C peut être un macromonomère à LCST ou un macromonomère à UCST.

Avantageusement, le polymère ne comprend pas plus de 15 mol% de monomère C, préférentiellement pas plus de 10 mol%, plus préférentiellement pas plus de 5 mol%.

Avantageusement, le ou les monomères anioniques hydrophiles sont choisis parmi les monomères présentant des fonctions vinyliques (avantageusement acryliques, maléiques, fumariques, malonique, itaconique, ou allyliques), et contenant un groupe carboxylate, phosphonate, phosphate, sulfate, sulfonate, ou un autre groupe à charge anionique. Des exemples de monomères convenables incluent l'acide acrylique ; l'acide méthacrylique ; l'acide diméthylacrylique ; l'acide itaconique ; l'hemi-ester de l'acide itaconique ; l'anhydride itaconique ; l'itaconamide ; l'acide crotonique ; l'acide maléique ; l'acide fumarique ; l'acide acrylamido undécanoïque ; l'acide 3-acrylamido 3-méthylbutanoïque ; le chlorure d'acryloyl ; l'anhydride maléique ; les monomères de type acide fort présentant par exemple une fonction de type acide sulfonique ou acide phosphonique tels que l'acide vinylsulfonique, l'acide vinylphosphonique, l'acide allylsulfonique, l'acide méthallylsulfonique, l'acide 2-méthylidenepropane-1,3-disulfonique, le 2-sulfoéthylméthacrylate, le sulfopropylméthacrylate, le sulfopropylacrylate, l'acide allylphosphonique, l'acide styrène sulfonique, l'acide 2-acrylamido-2-méthylpropane sulfonique (ATBS), l'acide 2-acrylamido-2-méthylpropane disulfonique ; les sels hydrosolubles de ces monomères comme leurs sels de métaux alcalins, de métaux alcalino-terreux, ou d'ammonium ; et leurs mélanges. Préférentiellement, le monomère anionique hydrophile est l'acide acrylique.

Dans un mode particulier, le ou les monomères anioniques hydrophiles peuvent être salifiés. Il peut également s'agir d'un mélange de forme acide et de forme salifiée, par exemple un mélange d'acide acrylique et d'acrylate.

Par salifié, on entend la substitution d'un proton d'au moins une fonction acide du type - R(=O)-OH (avec R= P, S ou C) du monomère anionique par un cation métallique ou ammonium pour former un sel du type -R(=O)-OX (X étant un cation métallique ou un cation organique). Autrement dit, la forme non salifiée correspond à la forme acide du monomère, par exemple R-C(=O)-OH dans le cas de la fonction acide carboxylique, alors que la forme salifiée du monomère correspond à la forme $R-C(=O)-O^- X^+$, $X^+$ correspondant à un cation alcalin ou un cation organique. La salification des fonctions acides du polymère peut être partielle ou totale.

La forme salifiée correspond avantageusement aux sels de métaux alcalins (Li, Na, K...), de métaux alcalino-terreux (Ca, Mg...) ou d'ammonium (par exemple l'ion ammonium ou un ammonium tertiaire). Les sels préférés sont les sels de sodium.

La salification peut se faire avant, durant ou après la polymérisation.

Dans un mode particulier, le polymère comprend avantageusement entre 10 et 100 mol% de monomère(s) anionique(s) hydrophile(s) de forme salifiée, préférentiellement entre 50 et 100 mol%, par rapport au nombre total de monomère(s) anionique(s) hydrophile(s).

Dans un mode particulier, 100 mol% des monomère(s) anionique(s) hydrophile(s) du polymère sont sous forme salifiée.

Avantageusement, le ou les monomères non-ioniques hydrophiles sont choisis, notamment, dans le groupe comprenant les monomères vinyliques solubles dans l'eau, comme l'acrylamide, le méthacrylamide, les N-alkylacrylamides, les N-alkylméthacrylamides, les N,N-dialkyl acrylamides (par exemple le N,N-diméthylacrylamide ou le N,N-diéthylacrylamide), les N,N-dialkylméthacrylamides, les esters alkoxylés de l'acide acrylique, les esters alkoxylés de l'acide méthacrylique, la N-vinylpyrrolidone, le N-méthylolacrylamide, la N-vinylformamide (NVF), le N-vinyl acétamide, le N-vinyl imidazole, le N-vinyl succinimide, le méthacrylate de glycidyle, le méthacrylate de glycéryle, la diacétone acrylamide, les hydroxyalkyl (méth)acrylate, les thioalkyl (méth)acrylate, les hydroxyalkylacrylates, les hydroxyalkyl méthacrylates, et leurs mélanges. Parmi ces monomères non-ioniques, les groupes alkyles sont avantageusement en $C_1$-$C_5$, plus avantageusement en $C_1$-$C_3$. Il s'agit préférentiellement d'alkyles linéaires. Préférentiellement, le monomère non-ionique hydrophile est l'acrylamide.

Avantageusement, le ou les monomères cationiques hydrophiles sont choisis, parmi les monomères dérivés des motifs de type vinylique (avantageusement acrylamide, acrylique, allylique ou maléique), ces monomères possédant une fonction phosphonium, ammonium tertiaire ou ammonium quaternaire. On peut citer, en particulier et de façon non limitative, les sels de diallyldialkyl ammonium comme le chlorure de diallyl diméthyl ammonium (DADMAC) ; les sels acidifiés ou quaternisés de dialkyl- aminoalkylacrylamides ; les sels acidifiés ou quaternisés de dialkyl- aminoalkylméthacrylamides, comme par exemple le chlorure de méthacrylamido-propyl triméthyl ammonium (MAPTAC), le chlorure d'acrylamido-propyl triméthyl ammonium (APTAC), les sels acidifiés ou quaternisés d'acrylate de dialkyl aminoalkyl comme l'acrylate de diméthylaminoéthyle (ADAME) quaternisé ou salifié, les sels acidifiés ou quaternisés de methacrylate de dialkyl aminoalkyl comme le méthacrylate de diméthylaminoéthyle (MADAME) quaternisé ou salifié, la vinylamine obtenue par l'hydrolyse (basique ou acide) d'un groupement amide $-N(R^2)-CO-R^1$ avec $R^1$ et $R^2$ étant, indépendamment, un atome d'hydrogène ou une chaine alkylée de 1 à 6 carbones, la vinylamine obtenue par dégradation d'Hofinann et leurs mélanges. Avantageusement, les groupes alkyles sont en $C_1$-$C_3$. Préférentiellement, le monomère cationique hydrophile est l'acrylate de diméthylaminoéthyle (ADAME) quaternisé ou salifié.

L'homme du métier saura préparer les monomères quaternisés, par exemple au moyen d'agent de quaternisation de type R-X, R étant un groupement alkyle et X étant un halogène ou un sulfate. L'agent de quaternisation peut être choisi parmi les sulfates de dialkyle comprenant de 1 à 6 atomes de carbones ou les halogénures d'alkyle comprenant de 1 à 6 atomes de carbones. Préférentiellement, l'agent de quaternisation est choisi parmi le chlorure de méthyle, le chlorure de benzyle, le diméthyl sulfate ou le diéthyl sulfate. En outre, la présente invention couvre également les monomères de type DADMAC, APTAC et MAPTAC dont le contre-ion est un sulfate, un fluorure, un bromure ou un iodure à la place du chlorure.

Par « agent de quaternisation » on désigne une molécule pouvant alkyler une amine tertiaire.

Avantageusement, le ou les monomères zwitterioniques hydrophiles peuvent être un dérivé d'un motif de type vinylique (avantageusement acrylamide, acrylique, allylique ou maléique), ce monomère possédant une fonction amine, ammonium tertiaire ou ammonium quaternaire et une fonction acide de type carboxylique (ou carboxylate), sulfonique (ou sulfonate) ou phosphorique (ou phosphate). On peut citer, en particulier et de façon non limitative les dérivés de l'acrylate de diméthylaminoéthyl, tel que le 2-((2-(acryloyloxy)éthyl) diméthylammonio) éthane-1-sulfonate, le 3-((2-(acryloyloxy) éthyl) diméthylammonio) propane-1-sulfonate, le 4-((2-(acryloyloxy)éthyl) diméthylammonio) butane-1-sulfonate, le

[2-(acryloyloxy)éthyl] (diméthylammonio) acetate, les dérivés du méthacrylate de diméthylaminoéthyle tel que le 2-((2-(méthacryloyloxy) éthyl) diméthylammonio) éthane-1-sulfonate, le 3-((2-(méthacryloyloxy) éthyl) diméthylammonio) propane-1-sulfonate, le 4-((2-(méthacryloyloxy) éthyl) diméthylammonio) butane-1-sulfonate, le [2-(méthacryloyloxy)éthyl] (diméthylammonio) acétate, les dérivés du diméthylamino propylacrylamide tel que le 2-((3-acrylamidopropyl) diméthylammonio) éthane-1-sulfonate, le 3-((3-acrylamidopropyl) diméthylammonio) propane-1-sulfonate, le 4-((3-acrylamidopropyl) diméthylammonio) butane-1-sulfonate, le [3-(acryloyloxy) propyl] (diméthylammonio) acétate, les dérivés du diméthylamino propyl méthylacrylamide tel que le 2-((3-méthacrylamidopropyl) diméthylammonio) éthane-1-sulfonate, le 3-((3-méthacrylamidopropyl) diméthylammonio) propane-1-sulfonate, le 4-((3-méthacrylamidopropyl) diméthylammonio) butane-1-sulfonate et le [3-(méthacryloyloxy)propyl] (diméthylammonio) acétate et leurs mélanges.

Dans un mode de réalisation particulier, le polymère peut comprendre au moins un monomère C à groupement à LCST.

Selon les connaissances générales de l'homme du métier, un groupement à LCST correspond à un groupement dont la solubilité dans l'eau pour une concentration déterminée, est modifiée au-delà d'une certaine température et en fonction de la salinité. Il s'agit d'un groupement présentant une température de transition par chauffage définissant son manque d'affinité avec le milieu solvant. Le manque d'affinité avec le solvant se traduit par une opacification ou une perte de transparence qui peut être due à une précipitation, une agrégation, une gélification ou une viscosification du milieu. La température de transition minimale est appelée « LCST » (température critique inférieure de solubilité, de l'anglais « Lower Critical Solution Température »). Pour chaque concentration de groupement à LCST, une température de transition par chauffage est observée. Elle est supérieure à la LCST qui est le point minimum de la courbe. En dessous de cette température, le polymère est soluble dans l'eau, au-dessus de cette température, le polymère perd sa solubilité dans l'eau.

Avantageusement, le polymère ne comprend pas de monomère C à groupement à LCST dont la température de transition est inférieure à 100°C, préférentiellement inférieure à 50°C, plus préférentiellement inférieure à 30°C, et plus préférentiellement inférieure à 25°C.

Dans un mode de réalisation particulier, le polymère peut comprendre au moins un monomère C à groupement à UCST.

Selon les connaissances générales de l'homme du métier, un groupement à UCST correspond à un groupement dont la solubilité dans l'eau pour une concentration déterminée, est modifiée en dessous d'une certaine température et en fonction de la salinité. Il s'agit d'un groupement présentant une température de transition par refroidissement définissant son manque d'affinité avec le milieu solvant. Le manque d'affinité avec le solvant se traduit par une opacification ou une perte de transparence qui peut être due à une précipitation, une agrégation, une gélification ou une viscosification du milieu. La température de transition maximale est appelée « UCST » (température critique supérieure de solubilité, de l'anglais « Upper Critical Solution Température »). Pour chaque concentration de groupement à UCST, une température de transition par refroidissement est observée. Elle est inférieure à la UCST qui est le point maximum de la courbe. Au-dessus de cette température, le polymère est soluble dans l'eau, en-dessous de cette température, le polymère perd sa solubilité dans l'eau.

Les quantités des différents monomère(s) seront ajustées par l'homme du métier afin de ne pas dépasser 100% molaire lors de la préparation du polymère.

**Structure du polymère**

Selon l'invention, le polymère peut avoir une structure linéaire, branchée, ramifiée, en forme d'étoile (ou « star » en anglais) ou en forme de peigne (ou « comb » en anglais). Cette structure peut être obtenue, selon les connaissances générales de l'homme du métier, par exemple par sélection de l'amorceur, de l'agent de transfert, de la technique de polymérisation telle que la polymérisation par transfert de chaîne par addition-fragmentation réversible (« Reversible Addition Fragmentation chain Transfer Polymerization » en anglais (RAFT)), la polymérisation contrôlée par des nitroxydes, (« Nitroxide Mediated Polymerization » en anglais (NMP)) ou la polymérisation par transfert d'atome (« Atom Transfer Radical Polymerization » en anglais (ATRP)), de l'incorporation de monomères structuraux, ou de la concentration.

Le polymère peut être un polymère statistique, un polymère à blocs ou un polymère à gradient. Préférentiellement, il s'agit d'un polymère à blocs, plus avantageusement un polymère constitué de blocs de monomères A et de blocs de monomères B.

Par « polymère statistique », on entend un polymère dans lequel la répartition des monomères est aléatoire. On obtient un polymère statistique lorsque tous les monomères composant le polymère sont présents au début de la polymérisation.

Par « polymère à blocs », on entend les di-blocs, tri-blocs ou multi-blocs, les polymères séquencés greffés, les polymères séquencés ramifiés (également connus sous le nom de polymères linéaires en étoile).

Les polymères ayant une structure à blocs sont des polymères composés d'au moins deux blocs de monomères

différents. Les polymères di-blocs ont deux blocs distincts ; les polymères tri-blocs en ont trois etc... Ils sont avantageusement obtenus en polymérisant successivement différentes espèces de monomères.

Dans un mode particulier, le polymère a une structure de type X-Y lorsqu'il est composé de deux monomères différents. Autrement dit, la première fraction comprend uniquement comme monomère, des monomères X. Ils sont polymérisés dans un premier temps et lorsque tous les monomères X ont réagi, on ajoute alors la deuxième fraction comprenant les monomères Y.

Dans un mode particulier, le polymère a une structure de type X-Y-Z lorsqu'il est composé de trois monomères différents (A, B et C). Autrement dit, la première fraction comprend uniquement des monomères X. Ils sont polymérisés dans un premier temps et lorsque tous les monomères X ont réagi, on ajoute alors la deuxième fraction comprenant les monomères Y. Lorsque tous les monomères Y ont réagi, on ajoute alors la troisième fraction comprenant les monomères Z.

Ce système de polymérisation peut être étendu pour obtenir des polymères dits multiblocs ayant une structure $X_1$-$Y_1$-...-$X_{n-1}$-$Y_{n-1}$-$X_n$-$Y_n$, n étant un nombre entier supérieur ou égal à 2 représentant le nombre de bloc.

Dans un mode préféré, le polymère comprend au moins deux blocs (avantageusement constitué de deux blocs) :

- un bloc BA hydrosoluble comprenant au moins un monomère A d'acryloyl morpholine ;
- un bloc BB hydrophobe comprenant au moins un monomère B hydrophobe.

Le bloc BA peut optionnellement comprendre un ou plusieurs monomères C différents de A choisis parmi les monomères anioniques hydrophiles, les monomères non-ioniques hydrophiles, les monomères cationiques hydrophiles et les monomères zwitterioniques hydrophiles, et leurs mélanges. Le monomère C peut être un macromonomère à LCST ou un macromonomère à UCST.

Lorsque le bloc BA hydrosoluble comprend un ou des monomères hydrophobes, il en comprend une quantité telle que le bloc BA reste hydrosoluble.

Les monomères susceptibles d'être utilisés pour former le bloc BA sont avantageusement choisis parmi les monomères hydrophiles précédemment décrits.

Avantageusement, la quantité de monomère A dans le bloc BA est comprise entre 25 et 100 mol% par rapport au nombre total de moles de monomères du polymère, préférentiellement entre 40 et 100 mol%, plus préférentiellement entre 50 et 100 mol%, et plus préférentiellement entre 85 et 100 mol%.

L'homme du métier saura ajuster les valeurs données pour les compositions molaire des bloc BA et BB de manière à rester en adéquation avec les valeurs des compositions molaire du polymère données précédemment. Autrement dit, même dans le cas d'un polymère à blocs, la composition molaire de l'ensemble du polymère à blocs respecte les valeurs décrites précédemment pour le polymère.

Dans un mode particulier, le bloc BA est constitué de monomère A d'acryloyl morpholine et de monomères C hydrophiles.

Dans un mode particulier, le bloc BA comprend majoritairement de monomère A d'acryloyl morpholine.

Dans un mode particulier, le bloc BA est constitué de monomère A d'acryloyl morpholine.

Le bloc BA a avantageusement un poids moléculaire moyen en nombre compris entre 1 000 et 100 000 g/mol, préférentiellement entre 2 000 et 50 000 g/mol, plus préférentiellement entre 2 500 et 25 000 g/mol.

Le bloc BB hydrophobe peut optionnellement comprendre un ou plusieurs monomères C choisis parmi les monomères anioniques hydrophiles, les monomères non-ioniques hydrophiles, les monomères cationiques hydrophiles et les monomères zwitterioniques hydrophiles, et leurs mélanges. Le monomère C peut être un macromonomère à LCST ou un macromonomère à UCST.

Les monomères susceptibles d'être utilisés pour former le bloc BB sont avantageusement choisis parmi les monomères hydrophiles précédemment décrits.

Avantageusement, la quantité de monomère B dans le bloc BB est comprise entre 25 et 100 mol% par rapport au nombre total de moles de monomères du polymère, préférentiellement entre 40 et 100 mol%, plus préférentiellement entre 50 et 100 mol%, et plus préférentiellement entre 85 et 100 mol%.

Lorsque le bloc BB comprend un ou des monomères C hydrophiles, il en comprend une quantité telle que le bloc BB est hydrophobe.

Dans un mode particulier, le bloc BB comprend majoritairement le N-ter-butyl acrylamide.

Dans un mode particulier, le bloc BB est constitué de monomères B hydrophobes.

Dans un mode particulier, le bloc BB est constitué de N-ter-butyl acrylamide.

Le bloc BB a avantageusement un poids moléculaire moyen en nombre compris entre 1 000 et 500 000 g/mol, préférentiellement entre 3 000 et 450 000 g/mol, plus préférentiellement entre 7 500 et 225 000 g/mol.

La masse molaire du bloc BB est avantageusement supérieure à la masse molaire du bloc BA.

Selon un mode de réalisation préféré, le polymère comprend un bloc BA ayant un poids moléculaire moyen en nombre compris entre 1 000 et 100 000 g/mol et constitué de monomères A d'acryloyl morpholine, et un bloc BB ayant un

poids moléculaire moyen en nombre compris entre 1 000 et 500 000 g/mol et constitué de monomères B hydrophobes.

Par « polymère à gradient », on entend un polymère dont la composition monomérique et/ou la structure varie de façon contrôlée tout le long de la chaine de polymère.

Les polymères ayant une structure à gradient sont des polymères composés d'au moins deux monomères dans lesquels le changement de composition des monomères est graduelle, contrairement aux polymères blocs, qui ont un changement abrupt de composition, et aux polymères aléatoires, qui n'ont pas de changement continu de composition. Dans le polymère à gradient, en raison du changement graduel de composition sur la longueur de la chaîne polymère, on observe moins de répulsion intra-chaîne et inter-chaîne.

Le gradient peut être formé par un gradient spontané ou forcé. La polymérisation à gradient spontané est due à une différence de réactivité des monomères. La polymérisation à gradient forcé implique de faire varier la composition en monomères introduits tout au long du temps de polymérisation.

Un procédé à gradient forcé comprend (1) l'introduction d'une première fraction de monomères dans un réacteur, (2) l'addition d'au moins une fraction de monomères supplémentaire et avantageusement différente de la première et (3) la polymérisation des monomères introduits dans le réacteur. La polymérisation des monomères est initiée dès l'introduction de la première fraction.

L'addition de la fraction de monomères supplémentaires peut se faire en parallèle avec l'introduction de la première fraction de monomères dans le réacteur (l'introduction des fractions peut donc commencer et se terminer en même temps). Alternativement, le début de la première alimentation en monomère (première fraction) dans le réacteur peut précéder le début de l'addition d'une deuxième fraction de monomère. Alternativement, une première et une deuxième fraction peuvent être introduites simultanément, mais la durée d'addition de la deuxième fraction peut être supérieure à la durée d'introduction de la première fraction dans le réacteur. Ce mode de réalisation est également applicable aux procédés mettant en œuvre au moins 3 fractions de monomères.

Dans le procédé de l'invention, le polymère obtenu est formé par l'addition séquencée des monomères, autrement dit, il s'agit d'un procédé à gradient forcé.

Le polymère peut en outre être structuré par un agent de ramification. Par polymère structuré, on désigne un polymère non linéaire qui possède des chaînes latérales de manière à obtenir, lorsque ce polymère est mis en solution dans l'eau, un fort état d'enchevêtrement conduisant à des viscosités importantes.

L'agent de ramification est avantageusement choisi parmi :

- les agents de structure, pouvant être choisis dans le groupe comprenant des monomères à insaturation polyéthylénique (ayant au minimum deux fonctions insaturées), comme par exemple les fonctions vinyliques, allyliques, acryliques et l'on peut citer par exemple le méthylène bis acrylamide (MBA), la triallyamine, ou le chlorure de tétraallylammonium ou 1,2 dihydroxyéthylène bis-(N-acrylamide),
- les monomères ayant au moins deux fonctions époxy,
- les monomères ayant au moins une fonction insaturée et une fonction époxy,
- les macroamorceurs tels que les polyperoxydes, polyazoïques et les polyagents de transfert tels que les polymères polymercaptants, et les polyols,
- les polysaccharides fonctionnalisés.

La quantité d'agent de ramification dans le polymère est avantageusement inférieure à 40 000 ppm en poids par rapport au poids total des monomères du polymère, préférentiellement inférieure à 10 000 ppm en poids, plus préférentiellement inférieure à 5 000 ppm en poids.

Dans un mode particulier, la quantité d'agent de ramification est au moins égale à 0,1 ppm en poids par rapport au poids total des monomères du polymère, préférentiellement au moins 1 ppm en poids, plus préférentiellement au moins 10 ppm en poids, plus préférentiellement au moins 100 ppm en poids et encore plus préférentiellement au moins 1 000 ppm en poids.

Dans un mode particulier, le polymère ne comprend pas d'agent de ramification.

Dans un mode particulier, le polymère peut comprendre un agent de transfert.

L'agent de transfert est avantageusement choisi parmi le méthanol ; l'alcool isopropylique ; l'hypophosphite de sodium ; l'hypophosphite de calcium ; l'hypophosphite de magnésium ; l'hypophosphite de potassium ; l'hypophosphite d'ammonium ; le 2-mercaptoéthanol ; le 3-mercaptopropanol ; le dithiopropylène glycol ; le thioglycérol ; l'acide thioglycolique ; l'acide thiohydracrylique ; l'acide thiolactique ; l'acide thiomalique ; la cystéine ; et l'aminoethanethiol ; les thioglycolates ; les allyl phosphites ; les allyl mercaptans, comme le n-dodécyl mercaptan ; le méthallysulfonate de sodium ; le méthallysulfonate de calcium ; le méthallysulfonate de magnésium ; le méthallysulfonate de potassium ; le méthallysulfonate d'ammonium ; les alkyls phosphites comme les tri alkyl ($C_{12}$-$C_{15}$) phosphites, le di-oléyl-hydrogénophosphites, le dibutyl phosphite, les dialkyldithiophosphates comme le dioctyl phosphonate, nonylmercaptan tertiaire, 2-éthylhexyl thioglycolate, n-octyl mercaptan, n-dodécyl mercaptan, tertio-dodécyl mercaptan, l'iso-octylthioglycolate, le 2-Ethylhexyl thioglycolate, le 2-Ethylhexyl mercaptoacetate, les polythiols et leurs mélanges. Préférentiellement, il s'agit de

l'hypophosphite de sodium.

La quantité d'agent de transfert est avantageusement comprise entre 0 et 100 000 ppm en poids par rapport au poids total des monomères du polymère, préférentiellement entre 0 et 10 000 ppm en poids, plus préférentiellement entre 0 et 1 000 ppm en poids, encore plus préférentiellement entre 0 et 100 ppm en poids.

Lorsqu'il est présent, l'agent de transfert représente au moins 0,1 ppm en poids, par rapport au poids total des monomères du polymère, préférentiellement au moins 1 ppm en poids.

Dans un mode particulier, le polymère ne comprend pas d'agent de transfert.

**Polymérisation du polymère**

De manière générale, le polymère ne nécessite pas de développement de procédé de polymérisation particulier. En effet, il peut être obtenu selon toutes les techniques de polymérisation bien connues par l'homme de métier. Il peut notamment s'agir de polymérisation en solution ; polymérisation en gel ; polymérisation par précipitation ; polymérisation en émulsion (directe ou inverse) ; polymérisation en suspension ; polymérisation par extrusion réactive ; polymérisation eau dans eau ; ou de polymérisation micellaire. Préférentiellement, le polymère est obtenu par polymérisation radicalaire de monomères en solution.

La polymérisation est généralement une polymérisation radicalaire. Par polymérisation radicalaire, nous incluons la polymérisation par radicaux libres au moyen d'initiateurs UV, azoïques, redox ou thermiques ainsi que les techniques de polymérisation radicalaire contrôlée (PRC) ou les techniques de polymérisation sur matrice.

Comme technique de polymérisation radicalaire contrôlée, on peut citer de façon non limitative, les techniques telles que la polymérisation par transfert d'iode « (Iodine Transfer Polymerization » en anglais (ITP)), la polymérisation contrôlée par des nitroxydes, (« Nitroxide Mediated Polymerization » en anglais (NMP)), par transfert d'atome (« Atom Transfer Radical Polymerization » en anglais (ATRP)), par transfert de chaîne par addition-fragmentation réversible (« Reversible Addition Fragmentation chain Transfer Polymerization » en anglais (RAFT)), dont fait partie la technologie MADIX (« MAcromolecular Design by Interchange of Xanthates » en anglais), diverses variations de polymérisations avec des composés organométalliques (« Organometallic Mediated Radical Polymerization » en anglais (OMRP)), la polymérisation radicalaire contrôlée par des composés hétéroatomiques (« OrganoHeteroatom-mediated Radical Polymerization » en anglais (OHRP)).

Le processus d'activation-désactivation lié à la polymérisation radicalaire contrôlée permet aux chaînes de croître à la même vitesse et ce, jusqu'à la consommation totale du monomère, rendant possible le contrôle des poids moléculaires des polymères et l'obtention de distributions étroites de poids moléculaires. Ceci va également permettre de minimiser l'hétérogénéité de la composition. La désactivation réversible des chaînes en croissance est à l'origine de la minimisation des réactions de terminaison irréversibles. La grande majorité des chaînes de polymère reste sous forme dormante et est donc réactivable. Il est alors possible de fonctionnaliser les extrémités de chaîne en vue d'amorcer d'autres modes de polymérisation ou pour faire des extensions de chaînes. Ceci permet de contrôler le poids moléculaire, la composition et l'architecture du polymère.

La polymérisation radicalaire contrôlée présente donc les aspects distinctifs suivants :

1- Le nombre de chaînes polymériques est fixe pendant toute la durée de la réaction,
2- Les chaînes polymériques croissent toutes à la même vitesse, ce qui se traduit par :

    * une augmentation linéaire des poids moléculaires,
    * une distribution des poids moléculaires moyens resserrée,

3- Le poids moléculaire moyen est contrôlé par le rapport molaire monomère/agent de contrôle.

Le caractère contrôlé est d'autant plus marqué que la vitesse de réactivation des chaînes en radical est nettement supérieure à la vitesse de croissance des chaînes (propagation). Cependant, dans certains cas, la vitesse de réactivation des chaînes en radical est supérieure ou égale à la vitesse de propagation. Dans ces cas, les conditions 1 et 2 ne sont pas observées et, par conséquent, le contrôle des poids moléculaires n'est pas possible.

Dans un mode préféré, le polymère est obtenu par polymérisation par transfert de chaîne par addition-fragmentation réversible (RAFT).

La polymérisation par transfert de chaîne par addition-fragmentation réversible nécessite la présence d'au moins un agent de contrôle, avantageusement de formule (IV) :

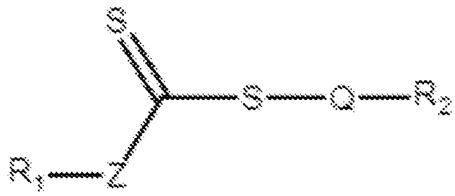

(IV)

dans laquelle

- Z= O, S ou N ;
- $R_1$ et $R_2$, identiques ou différents, représentent :

  * un groupe (i) alkyle, acyle, alcényle ou alcynyle éventuellement substitué, ou
  * un cycle carboné (ii), saturé ou non, éventuellement substitué ou aromatique, ou
  * un hétérocycle (iii), saturé ou non, éventuellement substitué ou aromatique, ces groupes et cycles (i), (ii) et (iii) pouvant être substitués par des groupes aromatiques substitués ou par des groupes alkoxycarbonyle ou aryloxycarbonyle (-COOR), carboxy (-COOH), acyloxy ($-O_2CR$), carbamoyle ($-CON(R)_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-N(R)_2$), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaines polyoxyde d'alkylène (POE, POP), les substituants cationiques (sels d'ammonium quaternaires) ; R représentant un groupe alkyle ou aryle en $C_1$-$C_{20}$ ;

- Q est une chaîne polymérique linéaire ou structuré comprenant n monomères identiques ou différents comprenant au moins une fonction éthylénique ;
- n est un nombre entier compris entre 0 et 500, avantageusement entre 1 à 500, plus avantageusement entre 1 et 100. Lorsque n = 0, Q est une liaison simple entre l'atome de soufre et le groupe $R_2$.

Le ou les monomères utilisés pour former Q sont avantageusement choisis parmi les mêmes monomères hydrophiles que ceux décrits pour former le polymère (monomères A et C). Il peut notamment s'agir de l'acrylamide, de l'acide acrylique et leurs mélanges.

Dans les fonctions $NR_2$, les deux groupes R peuvent être identiques ou différents l'un de l'autre.

Dans un mode préféré, l'agent de contrôle est de formule (IV) dans laquelle Z = O.

Dans un autre mode préféré, l'agent de contrôle est de formule (IV) dans laquelle :

- Z=O,
- Q est une chaîne polymérique linéaire ou structurée obtenue à partir de 1 à 100 monomères comprenant au moins un monomère non-ionique hydrophile et/ou au moins un monomère anionique hydrophile et/ou au moins un monomère cationique hydrophile.

Dans un autre mode préféré, l'agent de contrôle est de formule (V) :

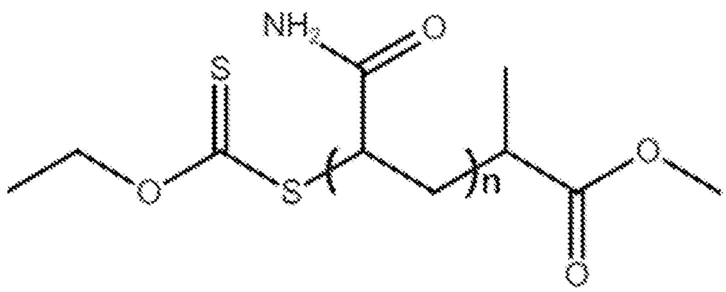

(V)

dans laquelle n est un nombre entier compris entre 0 et 100 préférentiellement entre 1 et 50.

Dans un autre mode préféré, l'agent de contrôle est de formule (IV) dans laquelle Z = S.

Dans un autre mode préféré, l'agent de contrôle est de formule (VI) :

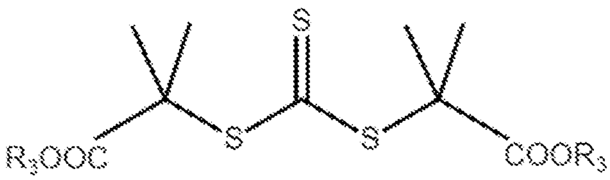

(VI)

dans laquelle

- Les groupes $R_3$ sont identiques ou différents, représentent indépendamment un H ou un $CH_3$ ou un cation, le cation étant avantageusement choisi parmi les cations de métaux alcalins (Li, Na, K...), de métaux alcalino-terreux (Ca, Mg...) ou d'ammonium (par exemple l'ion ammonium ou un ammonium tertiaire), préférentiellement le sodium.

Dans un autre mode préféré, l'agent de contrôle est de formule (VII) :

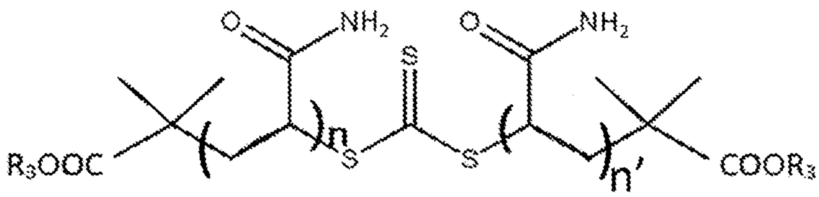

(VII)

Dans laquelle

- Les groupes $R_3$ sont identiques ou différents, représentent indépendamment un H ou un $CH_3$ ou un cation, le cation étant avantageusement choisi parmi les cations de métaux alcalins (Li, Na, K...), de métaux alcalino-terreux (Ca, Mg...) ou d'ammonium (par exemple l'ion ammonium ou un ammonium tertiaire), préférentiellement le sodium ;

et n et n' sont des nombres entier indépendant l'un de l'autre, compris entre 0 et 100 préférentiellement entre 1 et 50.

Dans un autre mode préféré, l'agent de contrôle est de formule (VIII) :

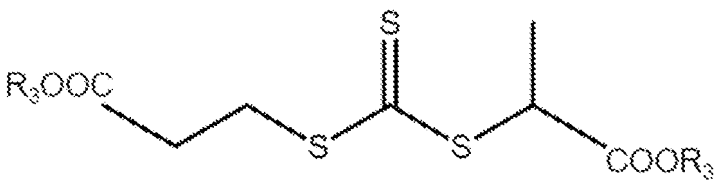

(VIII)

dans laquelle

- Les $R_3$ sont identiques ou différents, représentent indépendamment un H ou un $CH_3$ ou un cation, lé cation étant avantageusement choisi parmi les cations de métaux alcalins (Li, Na, K...), de métaux alcalino-terreux (Ca, Mg...) ou d'ammonium (par exemple l'ion ammonium ou un ammonium tertiaire), préférentiellement le sodium.

Dans un autre mode préféré, l'agent de contrôle est de formule (IX) :

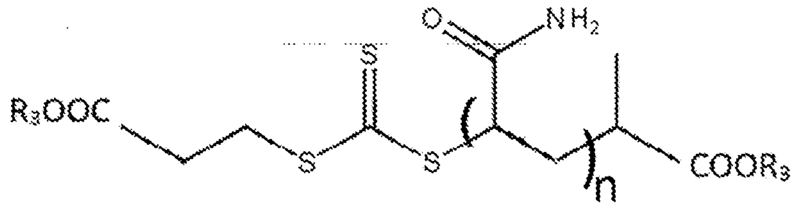

(IX)

dans laquelle

- Les groupes $R_3$ sont identiques ou différents, représentent indépendamment un H ou un $CH_3$ ou un cation, le cation étant avantageusement choisi parmi les cations de métaux alcalins (Li, Na, K...), de métaux alcalino-terreux (Ca, Mg...) ou d'ammonium (par exemple l'ion ammonium ou un ammonium tertiaire), préférentiellement le sodium ;

et n est un nombre entier égale, compris entre 0 et 100 préférentiellement entre 1 et 50.

Selon l'invention, la quantité d'agent de contrôle est avantageusement comprise entre $5.10^{-7}$% et 10% en poids, par rapport au poids total du milieux réactionnel, de préférence entre $5.10^{-4}$ et 5 % en poids.

Le ratio molaire monomère A / agent de contrôle dans la phase aqueuse est avantageusement compris entre 12 500:1 et 300 000:1, préférentiellement entre 27 500:1 et 250 000:1, plus préférentiellement entre 27 500:1 et 10 000:1.

Avantageusement, la polymérisation est réalisée dans de l'eau afin d'éviter l'utilisation de solvants toxiques pour l'homme ou l'environnement.

Avantageusement, l'agent de contrôle est solubilisé dans l'eau avant la polymérisation des monomères A et B. Il a été observé que les polymères obtenus avec un agent de contrôle solubilisé dans l'eau avant la polymérisation des monomères A et B offraient de meilleures performances de réduction de viscosité des bruts pétrolier.

Le polymère peut être partiellement ou totalement post hydrolysé.

La post hydrolyse est la réaction d'hydrolyse du polymère après sa formation par polymérisation de monomère(s). Cette étape consiste en la réaction de groupes fonctionnels hydrolysables de monomères C avantageusement non-ioniques, plus avantageusement les fonctions amide ou ester, avec un agent d'hydrolyse. Cet agent d'hydrolyse peut, par exemple, être une enzyme, une résine échangeuse d'ion, ou un acide de Brønsted (par exemple un acide halogénohydrique) ou une base de Brønsted (par exemple un hydroxyde alcalin ou un hydroxyde alcalino-terreux). Préférentiellement, l'agent d'hydrolyse est une base de Brønsted. Durant cette étape de post-hydrolyse du polymère, le nombre de fonctions acide carboxylique (ou carboxylate) augmente. En effet, la réaction entre la base et les fonctions amides ou esters présentes dans le polymère produit des groupes acides carboxylique ou carboxylate.

Le polymère peut se présenter sous forme liquide, gel ou solide lorsque sa préparation inclut une étape de séchage tel que le séchage par pulvérisation (« spray drying » en anglais), le séchage sur tambour, le séchage par rayonnement tel que le séchage micro-ondes, ou encore le séchage en lit fluidisé.

Le polymère a avantageusement un poids moléculaire moyen en nombre compris entre 2 000 et 600 000 g/mol, préférentiellement entre 5 000 et 500 000 g/mol, plus préférentiellement entre 10 000 et 250 000 g/mol.

L'indice de polydispersité (Ip) du polymère est avantageusement égal à 3 ou moins (≤3), de préférence inférieur ou égal à 2 (≤2), de préférence inférieur ou égal à 1,5 (≤1,5), encore plus préférentiellement égale à 1. L'indice de polydispersité est déterminé selon la formule suivante :

$$Ip = Mw/Mn$$

Mw est le poids moléculaire moyen en poids
Mn est le poids moléculaire moyen en nombre.

**Utilisation comme réducteur de viscosité d'hydrocarbures**

Comme déjà indiqué, la présente invention concerne l'utilisation comme réducteur de viscosité d'hydrocarbures, avantageusement d'hydrocarbures lourds, du polymère défini dans la revendication 1.

Le polymère peut être utilisé pour réduire la viscosité de tout type d'hydrocarbures, préférentiellement les hydrocarbures lourds (API < 31).

Le polymère peut être utilisé pour réduire la viscosité de tout type d'hydrocarbures, préférentiellement les hydrocarbures extra-lourds (API < 10).

La quantité de polymère ajoutée aux hydrocarbures est avantageusement comprise entre 10 et 10 000 ppm en

poids de polymère par rapport au poids d'hydrocarbures, préférentiellement entre 50 et 5 000 ppm, plus préférentiellement entre 100 et 2 000 ppm.

Le polymère fonctionne dans toutes les applications liées à la réduction de viscosité d'hydrocarbures (par exemple dans un réservoir souterrain, dans un pipeline, une installation de production, un mélange d'hydrocarbures lourds, une raffinerie). L'utilisation du polymère ne nécessite pas de traitement particulier, la réduction de viscosité se fait en mettant en contact le polymère décrit avec des hydrocarbures. Le polymère utilisé dans l'invention peut être ajouté à n'importe quel point de la ligne d'écoulement, avantageusement en amont du point où une viscosité réduite est souhaitée.

La mise en contact entre les hydrocarbures et le polymère peut se faire par tout moyen connu de l'homme du métier, par exemple une pompe, un mélangeur statique, un mélangeur dynamique.

Avantageusement, les hydrocarbures ne sont pas chauffés lors du procédé de réduction de viscosité d'hydrocarbures selon l'invention. En d'autres termes, le polymère selon l'invention peut être utilisé sans chauffer les hydrocarbures. Le procédé selon l'invention est donc avantageusement dépourvu d'étape de chauffage des hydrocarbures, avant ou après la mise en contact avec le polymère.

L'énergie utilisée pour mettre en œuvre le procédé est avantageusement issue d'une pompe à chaleur ou d'origine renouvelable, avantageusement de type éolien, photovoltaïque, pile à combustible ou batterie au lithium.

## EXEMPLES

Liste des abréviations :

AM = Acrylamide
AA = Acide acrylique
ACMO = 4-Acryloylmorpholine
TBA = N-tert-butyl acrylamide
DMA = Diméthylacrylamide
DEA = diéthylacrylamide
NIPAM = N-isopropylacrylamide

Caractérisation des polymères

Les polymères ont été analysés par chromatographie d'exclusion stérique (CES) afin de déterminer les masses molaires moyennes en nombre (Mn) et l'indice de polydispersité (Ip). Les conditions analytiques sont :

- Détecteur : indice de réfraction ;
- Colonnes chromatographiques : PL Aquagel, PL Aquagel OH 20, PL Aquagel OH 40 ;
- Solvant : NaCl, $NaH_2PO_4$, $NaN_3$.

**Exemple 1 : synthèse d'agents de contrôle**

Dans un réacteur de synthèse, sont introduits à température ambiante :

- 4,53 g d'O-ethyl-S-(1-méthoxycarbonyl) éthyl dithiocarbonate ;
- 22,66 g d'acrylamide ;
- 27,19 g d'eau déionisée ;
- 45,31 g d'acide acétique ;
- 0,32 g d'amorceur azoïque (VA 044).

Le mélange réactionnel est dégazé puis chauffé à 60°C. La réaction dure 3 heures sous agitation. L'agent de contrôle X1 est ainsi obtenu.

D'autres agents de contrôle (X2, X3, X4, X5 et X6) ont été synthétisés selon le même procédé. Ils sont caractérisés par des groupements Q de nature chimique différentes résumés dans le Tableau 1.

Synthèse de l'agent de contrôle X7

Dans un réacteur de synthèse équipé d'un système de refroidissement et de pompes d'introduction péristaltiques, sont introduits à température ambiante :

- 6 g de BM 1829 (2,2'-[carbonothioylbis(thio)]bis[2-methylpropanoic acid]) commercialisé par la société Boron

Molecular (R4 = H)

- 30,21 g d'acrylamide
- 40,78 g d'eau déionisée
- 0,35 g d'amorceur azoïque (VA 044)

Le mélange réactionnel est dégazé pendant 60 minutes puis chauffé à 60°C. La réaction dure 3 heures sous agitation. L'agent de contrôle X7 est ainsi obtenu dont la structure est résumée dans le Tableau 1.

Synthèse de l'agent de contrôle X8

La synthèse de l'agent de transfert X8 a été réalisé en suivant le protocole décrit dans les documents Lambert et Al., Polymer 46 (2005) 623-637. La structure de X8 est résumée dans le Tableau 1.

**Tableau 1 : Agents de contrôle**

| Référence | 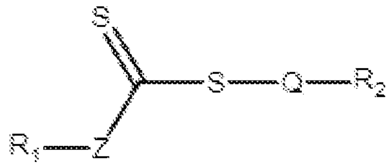 | | | | |
|---|---|---|---|---|---|
| | **$R_1$** | **$R_2$** | **Z** | **Q** | |
| | | | | **Monomère (mol%)** | **Mn (g/mol)** |
| **X1** | $C_2H_5$ | $CH(CH_3)$-$COOCH_3$ | O | AM (100mol%) | 700 |
| **X2** | $C_2H_5$ | $CH(CH_3)$-$COOCH_3$ | O | AM (100mol%) | 1400 |
| **X3** | $C_2H_5$ | $CH(CH_3)$-$COOCH_3$ | O | - | - |
| **X4** | $C_2H_5$ | $CH(CH_3)$-$COOCH_3$ | O | AM/AA (70/30 mol%) | 1230 |
| **X5** | HOOC-$C_2H_5$ | $CH(CH_3)$-COOH | S | - | - |
| **X6** | HOOC-$C(CH_3)_2$ | $C(CH_3)_2$-COOH | S | - | - |
| **X7** | 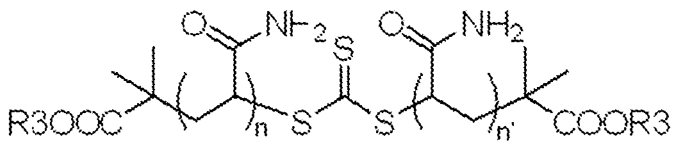 | | | | |
| | R3 | n | Bloc n Mn (g/mol) | n' | Bloc n Mn (g/mol) |
| | H | 10 | 700 | 10 | 700 |
| **X8** | 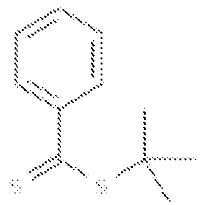 | | | | |

**Example 2 : Synthèse de polymères P1**

*2-1 Synthèse du Bloc A du polymère*

Dans un réacteur équipé d'un système d'agitation et de condensation des vapeurs, sont mélangés à température ambiante :

- 75,7 g d'eau déionisée ;
- 2,23 g de X1 ;
- 30 g de 4-Acryloylmorpholine.

Le milieu réactionnel est agité, dégazé à température ambiante pendant 30 minutes, puis chauffé à 60°C. La polymérisation est amorcée avec 0,173 g de 2,2'-Azobis(2-methylpropionamidine) dihydrochlorure (V-50). Le temps de réaction est de 120 minutes. On obtient alors le bloc A1-1.

D'autres bloc A ont également été synthétisés en utilisant le même protocole expérimental, en ajustant les quantités et en utilisant différents agents de contrôles. Les caractéristiques sont rassemblées dans le Tableau 2.

**Tableau 2 : Caractéristiques des blocs A**

| Essais | Synthèse bloc A | | | |
|---|---|---|---|---|
| | **Référence bloc A** | **Monomère bloc A** | **Agent de Contrôle** | **Mn (g/mol) bloc A** |
| **1** | **A1-1** | ACMO | X1 | 1530 |
| **2** | **A1-2** | ACMO | X1 | 2550 |
| **3** | **A1-3** | ACMO | X1 | 10110 |
| **4** | **A1-4** | ACMO | X1 | 12540 |
| **5** | **A1-5** | ACMO | X1 | 13950 |
| **6** | **A1-6** | ACMO | X1 | 24690 |
| **7** | **A1-7** | ACMO | X1 | 45230 |
| **8** | **A1-8** | ACMO | X2 | 10320 |
| **9** | **A1-9** | ACMO | X5 | 13350 |
| **10** | **A1-10** | ACMO | X6 | 11200 |
| **11** | **A1-11** | ACMO | X7 | 10340 |
| **12** | **A1-12** | ACMO | X8 | 10220 |
| **13** | **A1-13** | ACMO | X1 | 10390 |

*2-2 Synthèse du Bloc B du polymère*

La synthèse du bloc B est réalisée par extension du bloc A. Dans un réacteur équipé d'un système d'agitation et de condensation des vapeurs, sont mélangés à température ambiante :

- 21,7 g d'eau déionisée ;
- 2,29 g de bloc A1-2 ;
- 1,86 g de N-tert-butyl acrylamide;
- 3,92 g d'acrylamide.

Le milieu réactionnel est agité, dégazé à température ambiante pendant 30 minutes, puis chauffé à 60°C. La polymérisation est amorcée avec 0,006 g de 2,2'-Azobis(2-methylpropionamidine) dihydrochlorure (V-50). Le temps de réaction est de 240 minutes. La matière active finale du polymère à blocs P1-1 obtenu est de 21,5% en poids.

D'autres polymères à blocs ont également été synthétisés en utilisant ce protocole expérimental, en utilisant différents blocs A et en ajustant les quantités d'amorceurs. Les caractéristiques sont rassemblées dans le Tableau 3.

**Tableau 3 : Synthèse des polymères à blocs P1**

| Référence | Composition chimique des polymères à blocs | | | | | | | Caractérisation | |
|---|---|---|---|---|---|---|---|---|---|
| | Bloc A | | | Bloc B | | | | Mn Bloc A (g/mol) | Mn Bloc B (g/mol) |
| | Référence | Monomère | Mol % | Monomère 1 | Mol % | Monomère 2 | Mol % | Mol | Mol |
| **P1-1** | **A1-3** | ACMO | 5 | TBA | 20 | AM | 75 | 10110 | 194230 |
| **P1-2** | **A1-3** | ACMO | 10 | TBA | 15 | AM | 75 | 10110 | 80990 |
| **P1-3** | **A1-5** | ACMO | 50 | NIPAM | 50 | - | 0 | 13950 | 11120 |
| **P1-4** | **A1-3** | ACMO | 30 | TBA | 70 | - | 0 | 10110 | 20650 |
| **P1-5** | **A1-4** | ACMO | 35 | TBA | 65 | - | 0 | 12540 | 24280 |
| **P1-6** | **A1-4** | ACMO | 30 | TBA | 70 | - | 0 | 12540 | 28260 |
| **P1-7** | **A1-3** | ACMO | 30 | TBA | 35 | DMA | 35 | 10110 | 21590 |
| **P1-8** | **A1-11** | ACMO | 30 | TBA | 70 | - | 0 | 10340 | 20870 |
| **P1-9** | **A1-12** | ACMO | 30 | TBA | 70 | - | 0 | 10220 | 20050 |
| **P1-10** | **A1-13** | ACMO | 30 | DEA | 70 | - | 0 | 10390 | 20540 |

**Exemple 3 : synthèse de polymères P2**

Le polymère statistiques P2-1 a été synthétisé en suivant le protocole 2-1 ci-dessus, mais en ajoutant l'ensemble des monomères du polymère à la charge de polymérisation.

le polymère P2-2 a été synthétisé de la même façon que le polymère P2-1, mais l'agent de contrôle a été remplacé par une combinaison V-50, hypophosphite de sodium pour obtenir les caractéristiques rassemblées dans le Tableau 4.

**Tableau 4 : Caractéristiques des polymères P2**

| Référence | Polymère P2 | | | | | |
|---|---|---|---|---|---|---|
| | Monomère A | | Monomère B | | Agent de Contrôle | Mn (g/mol) |
| | Nature | mol % | Nature | mol % | | |
| **P2-1** | ACMO | 30 | TBA | 70 | X1 | 34950 |
| **P2-2** | ACMO | 30 | TBA | 70 | - | 37730 |

**Exemple 4 : Tests de réduction de la viscosité bulk - Brut pétrolier d'API 13**

Les polymères ont été mélangés à différents dosages dans un hydrocarbure de type brut pétrolier qui est caractérisé par un degré API égal à 13 selon le protocole suivant :

i) ajout du polymère dans le brut pétrolier à la température souhaitée ;
ii) agitation pendant 5 minutes à 400 rpm (tripale) ;
iii) mise au repos pendant 10 minutes sans agitation ;
iv) mesure de la viscosité à la température souhaitée.

Pour chaque essai, la viscosité Brookfield avant et après addition du polymère a été mesurée (module LV3, 60 rpm). Les pourcentages de réduction de la viscosité bulk avant et après addition du polymère sont déduits avec la formule suivante :

$$\% \text{ Réduction} = 100 \times (1 - (\text{VB finale} / \text{VB initiale}))$$

dans laquelle VB finale = viscosité Brookfield finale ;
VB initiale = viscosité Brookfield initiale.

L'agitation de l'étape ii) permet de simuler le cisaillement rencontré dans les procédés de réduction de viscosité d'hydrocarbures.

Les résultats sont rassemblés dans le Tableau 5.

**Tableau 5 : Test de réduction de la viscosité bulk**

| Essai | Polymère | Pourcentage de réduction de la viscosité bulk | | | |
|---|---|---|---|---|---|
| | | 20°C | | | 50°C |
| | | Concentration massique en polymère | | | |
| | | 200 ppm | 1000 ppm | 1500 ppm | 1000 ppm |
| 1 | P1-1 | < 0,5% | < 0,5% | < 0,5% | 7% |
| 2 | P1-2 | < 0,8% | < 0,8% | < 0,8% | 4% |
| 3 | P1-3 | 1% | 3% | 5% | 9% |
| 5 | P1-4 | 20% | 29% | 33% | 28% |
| 6 | P1-6 | 21% | 26% | 30% | 24% |
| 7 | P2-1 | 10% | 15% | 22% | 17% |
| 8 | P2-2 | 7% | 12% | 18% | 14% |
| 16 | P1-8 | 21% | 27% | 34% | 29% |
| 17 | P1-9 | 7% | 13% | 17% | 15% |
| 20 | P1-10 | < 1% | 2% | 5% | 8% |

Les meilleurs résultats ont été obtenus pour les essais 5, 6 et 16 mettant en œuvre les polymères à blocs P1-4, P1-6 et P1-8 dans le pétrole brut d'API 13. Les essais 7, 8 et 17 (P2-1, P2-2 et P1-9) montrent que le choix de l'agent de contrôle permet d'obtenir de meilleurs résultats pour une même composition molaire monomérique.

Les essais 5, 6, 7 et 16 montrent que les performances des polymères P1-4, P1-6, P2-1 et P1-8 ne dépendent pas de la température. Ils sont aussi performants à température ambiante qu'à 50°C.

Les essais P1-1 à P1-3 démontrent que, lorsque les proportions de monomère ne sont pas selon l'invention, il n'y a pas ou peu de réduction de la viscosité, d'avantage à température ambiante.

**Exemple 5 : Tests de réduction de la viscosité bulk dans un brut pétrolier d'API 28**

Les essais suivants visent à évaluer les performances de certains polymères dans un hydrocarbure de type pétrole brut caractérisé par un degré d'API égal à 28. La mise en œuvre des essais est identique à celle des essais de l'exemple 4. Les pourcentages de réduction sont calculés suivant la formule de calcul de l'exemple 4. Les résultats sont rassemblés dans le Tableau 6.

**Tableau 6: Test de réduction de la viscosité bulk**

| Essai | Polymère | % de réduction de la viscosité bulk | | |
|---|---|---|---|---|
| | | 20°C | | |
| | | Concentration massique en polymère | | |
| | | 200 ppm | 1000 ppm | 1500 ppm |
| 9 | P1-1 | < 0,2% | < 0,2% | < 0,2% |
| 10 | P1-2 | < 0,1% | < 0,2% | < 0,1 % |
| 11 | P1-3 | < 1% | 1,5 % | 1,5% |
| 12 | P1-4 | 17% | 22% | 25% |
| 13 | P1-6 | 16% | 21% | 26% |

(suite)

| Essai | Polymère | % de réduction de la viscosité bulk | | |
|---|---|---|---|---|
| | | 20°C | | |
| | | Concentration massique en polymère | | |
| | | 200 ppm | 1000 ppm | 1500 ppm |
| **14** | **P2-1** | 9% | 13% | 19% |
| **15** | **P2-2** | 3% | 4% | 6% |
| **18** | **P1-8** | 18% | 22% | 27% |
| **19** | **P1-9** | 3,5% | 4% | 7% |

Cette nouvelle série d'essais montrent que les polymères P1-4, P1-6, P2-1, et P1-8 sont également efficaces dans un pétrole brut d'API plus élevé.

## Revendications

1. Procédé de réduction de viscosité d'hydrocarbures comprenant la mise en contact entre des hydrocarbures et un polymère comprenant, par rapport à la quantité totale de monomère :

   - au moins 10 mol% d'un monomère A d'acryloyl morpholine ;
   - au moins 20 mol% d'un monomère B hydrophobe,

   un monomère hydrophobe étant un monomère présentant un coefficient de partage octanol/eau, $K_{ow}$, supérieur à 1, dans lequel le coefficient de partage $K_{ow}$ est déterminé à 25°C dans un mélange octanol/eau ayant un rapport volumique 1/1, à un pH compris entre 6 et 8, le coefficient de partage octanol/eau, $K_{ow}$, représentant le rapport des concentrations en g/L d'un monomère entre la phase octanol et la phase aqueuse et étant défini ainsi :

$$K_{ow} = \frac{[monomère]_{octanol}}{[monomère]_{eau}}$$

2. Procédé selon la revendication 1, ***caractérisé* en ce que** le polymère comprend entre 10 et 65 mol% de monomère A d'acryloyl morpholine, par rapport à la quantité totale de monomère.

3. Procédé selon la revendication 1 ou 2, ***caractérisé* en ce que** le monomère B hydrophobe est choisi parmi : les dérivés d'acrylamide N,N dialkyl acrylamido et les dérivés d'acrylamide N alkyl acrylamido, et leurs mélanges ; ces dérivés comprenant une chaine alkyl en $C_4$-$C_{14}$, préférentiellement en $C_4$-$C_8$.

4. Procédé selon l'une des revendications 1 à 3, ***caractérisé* en ce que** le polymère comprend entre 35 et 90 mol% de monomère B hydrophobe, par rapport à la quantité totale de monomère.

5. Procédé selon l'une des revendications 1 à 4, ***caractérisé* en ce que** le polymère est un polymère à blocs.

6. Procédé selon l'une des revendications 1 à 5, ***caractérisé* en ce que** le polymère est composé d'au moins deux blocs :

   - un bloc BA hydrosoluble comprenant au moins un monomère A d'acryloyl morpholine ;
   - un bloc BB hydrophobe comprenant au moins un monomère B hydrophobe.

7. Procédé selon l'une des revendications 1 à 6, ***caractérisé* en ce que** le polymère comprend un bloc BA constitué de monomère A d'acryloyl morpholine et un bloc BB constitué de monomères B hydrophobes.

8. Procédé selon l'une des revendications 1 à 7, ***caractérisé* en ce que** le polymère est obtenu par polymérisation radicalaire de monomères en solution, et **en ce que** le procédé est donc dépourvu d'étape de chauffage des hydrocarbures, avant ou après la mise en contact avec le polymère.

**9.** Procédé selon l'une des revendications 1 à 8, ***caractérisé* en ce que** le polymère est obtenu par polymérisation par transfert de chaîne par addition-fragmentation réversible en présence d'au moins un agent de contrôle de formule (IV) :

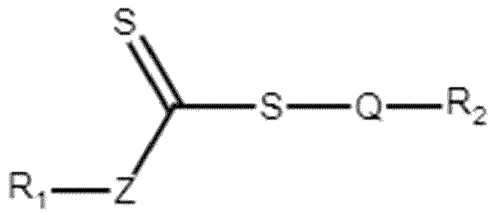

(IV)

dans laquelle

- Z= O, S ou N,
- $R^1$ et $R^2$, identiques ou différents, représentent un groupe choisi parmi les groupes (i), (ii) et (iii) :

  (i) un groupe alkyle, acyle, alcényle ou alcynyle éventuellement substitué, ou
  (ii) un cycle carboné, saturé ou non, éventuellement substitué ou aromatique, ou
  (iii) un hétérocycle, saturé ou non, éventuellement substitué ou aromatique,

ces groupes (i), (ii) et (iii) pouvant être substitués par des groupes aromatiques substitués ou par des groupes alkoxycarbonyle ou aryloxycarbonyle -COOR, carboxy -COOH, acyloxy - $O_2CR$, carbamoyle -$CONR_2$, cyano -CN, alkylcarbonyle, alkylarylcarbonyle, arylcarbonyle, arylalkylcarbonyle, phtalimido, maleïmido, succinimido, amidino, guanidimo, hydroxy (-OH), amino (-$NR_2$), halogène, allyle, époxy, alkoxy (-OR), S-alkyle, S-aryle, les sels alcalins d'acides carboxyliques, les sels alcalins d'acide sulfonique, les chaines polyoxyde d'alkylène, les substituants cationiques,
- R représentant un groupe alkyle ou aryle en $C_2$-$C_{20}$ ;
- Q est une chaîne polymérique linéaire ou structuré comprenant n monomères identiques ou différents comprenant au moins une fonction éthylénique ,
- n est un nombre entier compris entre 0 et 500.

**10.** Procédé selon l'une des revendications 1 à 9, ***caractérisé* en ce que** les hydrocarbures sont des hydrocarbures lourds ayant une densité API inférieure à 31.

**11.** Procédé selon l'une des revendications 1 à 10, ***caractérisé* en ce que** les hydrocarbures sont des hydrocarbures lourds ayant une densité API inférieure à 20.

**12.** Procédé selon l'une des revendications 1 à 11, ***caractérisé* en ce que** les hydrocarbures sont des hydrocarbures extra-lourds ayant une densité API inférieure à 10.

**13.** Procédé selon l'une des revendications 1 à 12, l'énergie utilisée pour mettre en œuvre le procédé est issue d'une pompe à chaleur ou d'origine renouvelable, avantageusement de type éolien, photovoltaïque, pile à combustible ou batterie au lithium.

### Patentansprüche

**1.** Verfahren zur Verringerung der Viskosität von Kohlenwasserstoffen, wobei im Rahmen desselben Kohlenwasserstoffe mit einem Polymer in Kontakt gebracht werden, das unter Bezugnahme auf die Gesamtmonomermenge Folgendes umfasst:

- mindestens 10 mol-% eines Acroloylmorpholin-Monomers A;
- mindestens 20 mol-% einer hydrophoben Monomers B;

wobei es sich bei dem hydrophoben Monomer um ein Monomer handelt, das einen Octanol/Wasser-Verteilungskoeffizienten $K_{ow}$ von mehr als 1 hat, wobei der Verteilungskoeffizient $K_{ow}$ bei 25 °C in einer Octanol/Wasser-Mischung mit einem Volumenverhältnis von 1/1 bestimmt wird, bei einem pH-Wert zwischen 6 und 8, wobei der Octanol/Wasser- Verteilungskoeffizient $K_{ow}$ für das Verhältnis der Konzentrationen in g/L eines Monomers zwischen der Octanolphase und der Wasserphase steht und folgendermaßen definiert ist:

$$K_{ow} = \frac{[Monomer]_{Octanol}}{[Monomer]_{Wasser}}$$

2. Verfahren nach Anspruch 1, **dadurch *gekennzeichnet,* dass** das Polymer zwischen 10 und 65 mol-% an Acroloylmorpholin-Monomer A umfasst, unter Bezugnahme auf die Gesamtmonomermenge.

3. Verfahren nach Anspruch 1 oder 2, **dadurch *gekennzeichnet,* dass** das hydrophobe Monomer B aus den folgenden ausgewählt ist: den Derivaten von N,N-Dialkylacrylamido-Acrylamid und den Derivaten von N-Alkylacrylamido-Acrylamid und deren Mischungen; wobei diese Derivate eine $C_4$-$C_{14}$-, vorzugsweise eine $C_4$-$C_8$-Alkylkette umfassen.

4. Verfahren nach einem der Ansprüche 1 bis 3, **dadurch *gekennzeichnet,* dass** das Polymer zwischen 35 und 90 mol-% an hydrophobem Monomer B umfasst, unter Bezugnahme auf die Gesamtmonomermenge.

5. Verfahren nach einem der Ansprüche 1 bis 4, **dadurch *gekennzeichnet,* dass** es sich bei dem Polymer um ein Blockpolymer handelt.

6. Verfahren nach einem der Ansprüche 1 bis 5, **dadurch gekennzeichnet, dass** sich das Polymer aus mindestens zwei Blöcken zusammensetzt:

   - einem wasserlöslichen Block BA, der mindestens ein Acryloylmorpholin-Monomer A umfasst;
   - einem hydrophoben Block BB, der mindestens ein hydrophobes Monomer B umfasst.

7. Verfahren nach einem der Ansprüche 1 bis 6, **dadurch *gekennzeichnet,* dass** das Polymer einen Block BA, welcher aus Acryloylmorpholin-Monomer A besteht, und einen Block BB umfasst, welcher aus hydrophoben Monomeren B besteht.

8. Verfahren nach einem der Ansprüche 1 bis 7, **dadurch gekennzeichnet, dass** das Polymer durch eine radikalische Polymerisation von Monomeren in Lösung erhalten wird, und dadurch, dass es folglich im Rahmen des Verfahrens zu keinerlei Schritt des Erhitzens der Kohlenwasserstoffe vor oder nach dem Inkontaktbringen mit dem Polymer kommt.

9. Verfahren nach einem der Ansprüche 1 bis 8, **dadurch gekennzeichnet, dass** das Polymer durch Polymerisation mittels Kettenübertragung durch reversible Addition-Fragmentation in Gegenwart mindestens eines Steuerungsmittels der Formel (IV) erhalten wird:

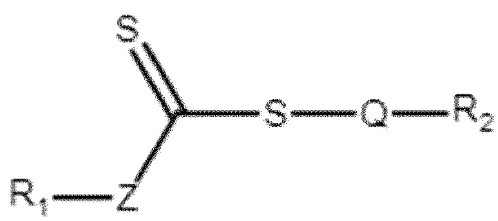

(IV)

in welcher

   - Z = O, S oder N,
   - $R^1$ und $R^2$, die vollkommen gleichartig oder verschiedenartig sein können, für eine Gruppe stehen, die aus den Gruppen (i), (ii) und (iii) ausgewählt ist:

      (i) einer gegebenenfalls substituierten Alkyl-, Acyl-, Alkenyl- oder Alkinylgruppe, oder

(ii) einer gegebenenfalls substituierten oder aromatischen carbozyklischen Verbindung gesättigter oder ungesättigter Art, oder

(iii) einer gegebenenfalls substituierten oder aromatischen heteozyklischen Verbindung gesättigter oder ungesättigter Art,

wobei die Gruppen (i), (ii) und (iii) mit substituierten aromatischen Gruppen oder mit Gruppen der Art Alkoxycarbonyl oder Aryloxycarbonyl -COOR, Carboxy -COOH, Acyloxy -$O_2CR$, Carbamoyl -$CONR_2$, Cyano -CN, Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-$NR_2$), Halogen, Allyl, Epoxy, Alkoxy (-OR), S-Alkyl, S-Aryl, Alkalisalzen von Carbonsäuren, Alkalisalzen von Sulfonsäure, Polyalkylenoxidketten, kationischen Substituenten substituiert sein können,

- wobei R für eine $C_2$-$C_{20}$-Alkylgruppe oder -Arylgruppe steht;
- Q für eine geradkettige oder strukturierte Polymerkette steht, die n vollkommen gleichartige oder verschiedenartige Monomere umfasst, welche mindestens eine funktionelle Ethylengruppe umfassen,
- n eine ganze Zahl im Bereich von 0 bis 500 ist.

**10.** Verfahren nach einem der Ansprüche 1 bis 9, **dadurch gekennzeichnet, dass** es sich bei den Kohlenwasserstoffen um schwere Kohlenwasserstoffe handelt, die einen API-Grad von weniger als 31 haben.

**11.** Verfahren nach einem der Ansprüche 1 bis 10, **dadurch gekennzeichnet, dass** es sich bei den Kohlenwasserstoffen um schwere Kohlenwasserstoffe handelt, die einen API-Grad von weniger als 20 haben.

**12.** Verfahren nach einem der Ansprüche 1 bis 11, **dadurch gekennzeichnet, dass** es sich bei den Kohlenwasserstoffen um sehr schwere Kohlenwasserstoffe handelt, die einen API-Grad von weniger als 10 haben.

**13.** Verfahren nach einem der Ansprüche 1 bis 12, wobei die Energie, welche dazu verwendet wird, das Verfahren umzusetzen, aus einer Wärmepumpe stammt oder erneuerbaren Ursprung ist, vorteilhafterweise vom Typ Windkraft, Photovoltaik, Brennstoffzelle oder Lithiumbatterie.

## Claims

**1.** Method for reducing the viscosity of hydrocarbons, comprising bringing hydrocarbons into contact with a polymer comprising, with respect to the total quantity of monomer:

- at least 10 mol% of an acryloyl morpholine monomer A;
- at least 20 mol% of a hydrophobic monomer B,

a hydrophobic monomer being a monomer with an octanol-water partition coefficient, $K_{ow}$, greater than 1, wherein the partition coefficient $K_{ow}$ is determined at 25°C in an octanol/water mixture with a volume ratio of 1/1, at a pH of between 6 and 8, the octanol/water partition coefficient, $K_{ow}$, representing the ratio of the concentrations in g/L of a monomer between the octanol phase and the aqueous phase and being defined as follows:

$$K_{ow} = \frac{[monomer]octanol}{[monomer]water}$$

**2.** Method according to claim 1, ***characterised* in that** the polymer comprises between 10 and 65 mol% of acryloyl morpholine monomer A, relative to the total amount of monomer.

**3.** Method according to Claim 1 or 2, ***characterised* in that** the hydrophobic monomer B is chosen from: N,N-dialkylacrylamido acrylamide derivatives and N-alkylacrylamido acrylamide derivatives, and mixtures thereof; these derivatives comprising a $C_4$-$C_{14}$, preferably $C_4$-$C_8$ alkyl chain.

**4.** Method according to any one of claims 1 to 3, ***characterized* in that** the polymer comprises between 35 and 90 mol% of hydrophobic monomer B, relative to the total amount of monomer.

**5.** Method according to any one of claims 1 to 4, ***characterised in that*** the polymer is a block polymer.

**6.** Method according to any one of claims 1 to 5, ***characterised*** **in that** the polymer is composed of at least two blocks:

- - a water-soluble block BA comprising at least one acryloyl morpholine monomer A;
- - a hydrophobic block BB comprising at least one hydrophobic monomer B.

**7.** Method according to any one of claims 1 to 6, ***characterised*** **in that** the polymer comprises a block BA consisting of acryloyl morpholine monomer A and a block BB consisting of hydrophobic monomers B.

**8.** Method according to any one of claims 1 to 7, ***characterised*** **in that** the polymer is obtained by radical polymerization of monomers in solution, and **in that** the method is therefore devoid of a step of heating the hydrocarbons, before or after contact with the polymer.

**9.** Method according to any one of claims 1 to 8, ***characterised*** **in that** the polymer is obtained by reversible addition-fragmentation chain-transfer polymerization in the presence of at least one control agent of formula (IV):

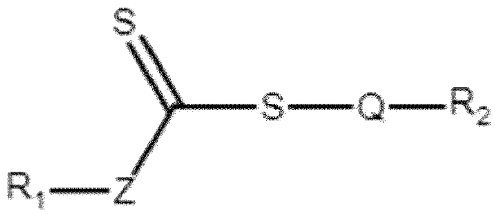

(IV)

wherein

- Z=O, S or N,
- $R^1$ and $R^2$, identical or different, represent a group chosen from groups (i), (ii) and (iii):

(i) an optionally substituted alkyl, acyl, alkenyl or alkynyl group, or
(ii) a carbon ring, saturated or unsaturated, optionally substituted or aromatic, or
(iii) a heterocycle, saturated or unsaturated, optionally substituted or aromatic, these groups (i), (ii) and (iii) being able to be substituted by substituted aromatic groups or by alkoxycarbonyl or aryloxycarbonyl-COOR, carboxy-COOH, acyloxy-$O_2CR$, carbamoyl-$CONR_2$, cyano-CN, alkylcarbonyl, alkylarylcarbonyl, arylcarbonyl, arylalkylcarbonyl, phthalimido, maleimido, succinimido, amidino, guanidimo, hydroxy (-OH), amino (-$NR_2$), halogen, allyl, epoxy, alkoxy (-OR), S-alkyl, S-aryl, alkaline salts of carboxylic acids, alkaline salts of sulfonic acid, polyalkylene oxide chains, cationic substituents,

- R represents a $C_2$-$C_{20}$ alkyl or aryl group;
- Q is a linear or structured polymer chain comprising n identical or different monomers comprising at least one ethylenic function,
- n is an integer of between 0 and 500.

**10.** Method according to any one of claims 1 to 9, ***characterised*** **in that** the hydrocarbons are heavy hydrocarbons having an API density of less than 31.

**11.** Method according to any one of claims 1 to 10, ***characterised*** **in that** the hydrocarbons are heavy hydrocarbons having an API density of less than 20.

**12.** Method according to any one of claims 1 to 11, ***characterised*** **in that** the hydrocarbons are extra-heavy hydrocarbons having an API density of less than 10.

**13.** Method according to any one of claims 1 to 12, wherein the energy used to implement the method comes from a heat pump or a pump of renewable origin, advantageously of the wind, photovoltaic, fuel cell or lithium battery type.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- CN 110452676
- CN 110484228
- CN 112592430
- US 2003135003 A
- US 20070062101 A
- US 2005085588 A
- EP 0444864 A
- JP 2015080903 A


### Littérature non-brevet citée dans la description


- Synthesis, characterization and application of dual thermo- and solvent-responsive double-hydrophilic diblock copolymers of N-acryloylmorpholine and N-isopropylacrylamide. *Journal of Molecular Liquids*, 06 April 2022, vol. 357
- Preparation and evaluation of double-hydrophilic deblock copolymer as viscosity reducers for heavy oil. *Journal of Applied Polymer Science*, 26 October 2022, vol. 140
- Poly(N-tert-butyl acrylamide-b-N-acryloylmorpholine) amphiphilic block copolymers via RAFT polymerization: Synthesis, purification and characterization. *Polymer*, 18 January 2007, vol. 48, 437-447
- RAFT Homo- and Copolymerization of N-Acryloylmorpholine, Piperidine, and Azocane and Their Self-Assembled Structures. *Macromolecules*, 01 February 2008, vol. 41, 1140-1150
- **LAMBERT et al.** *Polymer*, 2005, vol. 46, 623-637